# EUROPEAN PATENT APPLICATION

(11) **EP 2 372 565 A1**
(43) Date of publication of application: **05.10.2011**
(21) Application number: 10305328.6
(22) Date of filing: 30.03.2010
(51) Int. Cl.: G06F 13/42

(54) **Method for managing USB devices**

(71) Applicant: Gemalto SA, 92190 Meudon (FR)
(72) Inventor: Bretagne, Eric, 13080, Luynes (FR)
(74) Representative: Grevin, Emmanuel

(57) **Abstract**

The invention is a method of managing a USB device that comprises a mass-storage unit having a CD-ROM part. The CD-ROM part comprises a first software component. The device has a first configuration which comprises an interface of the mass-storage unit. The device is able to plug into a host machine having a second configuration. The CD-ROM part comprises a diagnostic agent and a configuration service. The method comprises the following steps:
a) analyzing the second configuration with the diagnostic agent and generating a diagnostic status,
b) selecting a first set comprising the configuration service and the first component according to the diagnostic status and deploying the first set into the host machine,
c) identifying a configuration data according to the second configuration,
d) updating said first configuration according to the configuration data.

## Description

### (Field of the invention)

The present invention relates to method for managing USB devices. It relates particularly to method of managing portable USB devices which are intended to plug into different kinds of host machines.

### (Prior art)

The Universal Serial Bus Specification, Revision 2.0, April 27, 2000 is the product of a consortium of companies. The document defines an industry- standard Universal Serial Bus and describes the bus attributes, the protocol definition, types of transactions, bus management, and the programming interface required to design and build systems and peripherals that are compliant with this standard.

The USB is a cable bus that supports data exchange between a host computer and a wide range of simultaneously accessible peripherals. The attached peripherals share USB bandwidth through a host-scheduled, token based protocol. The bus allows peripherals to be inserted, attached, configured, used, and detached while the host and other peripherals are in operation.

A USB device must be able to manage at least one class which allows a connected host to access the USB device. A class is a logical interface, also named merely interface. For example, the interface may be a mass-storage device (MSC) class, a still imaging device (SID) class or a human interface device (HID) class. A USB device may be able to manage several classes. In other words a USB device may have several interfaces. According to the USB standard, a USB device must enumerate its available interfaces when it is inserted into a USB host.

The USB host machine needs a relevant driver for being able to access a USB device through its interface. Each interface requires its own associated driver. Many hosts do not have all drivers required by the interfaces exposed by USB devices. The list of drivers which are installed on a host machine mainly depends on the operating system of the host machine. For example, the operating system of a host machine may be Unix ®, Linux ®, Mac OS ®, MS-Windows ®, Symbian ®, Windows mobile ® or iPhone OS ®.

When a USB device which exposes several interfaces is attached to a USB host machine, the USB device cannot be used while all the required drivers are not installed on the host machine. The end-user may be prompted to install manually the missing drivers.

A problem is to provide a solution wherein no end-user action is required for the driver selection and installation on the host machine.

### (Summary of the Invention)

An object of the invention is to solve the above mentioned technical problem. In accordance with the principles of the invention, a USB device plugged to a host machine is capable of automatically managing the installation of the relevant driver on the host machine and to adapt the list of its exposed interfaces according to the host constraints.

The object of the present invention is a method of managing a USB device comprising a mass-storage unit that has a CD-ROM part. The CD-ROM part comprises a first software component. The USB device has a first configuration which comprises an interface of the mass-storage unit. The USB device is able to plug into a host machine having a second configuration. The CD-ROM part comprises a diagnostic agent and a configuration service. The method comprises the following steps:
a) analyzing the second configuration with said diagnostic agent and generating a diagnostic status,
b) selecting a first set comprising the configuration service and the first component according to the diagnostic status and deploying the first set into the host machine,
c) identifying a configuration data according to the second configuration,
d) updating said first configuration according to the configuration data.

Advantageously, the method may comprise the further step:
e) automatically starting the configuration service after each logon on said host machine.

Advantageously, the first configuration may have a default value which comprises only one interface and the first configuration is set to the default value each time the device plugs into said host machine.

In a preferred embodiment, the updating step of the first configuration may correspond to the addition of a second interface into the first configuration and the first software component may be a driver corresponding to the second interface.

In a preferred embodiment, the CD-ROM part may be a hybrid CD-ROM part.

Advantageously, the CD-ROM part may comprise a second software component, the first set may comprise the second software component and said second component may be related to a driver, a service or an application intended to be deployed into the host machine.

In a preferred embodiment, the method may comprise two additional steps which are executed after the updating step of the first configuration:
f) analyzing the second configuration with said diagnostic agent and generating a second diagnostic status,
g) selecting a second set comprising the first software component according to the second diagnostic status and deploying the second set into the host machine.

Advantageously, the second diagnostic status may be generated by checking the presence or the integrity of software components which are deployed into the host machine.

Another object of the invention is a USB device which is intended to be connected to a host machine. The USB device comprises a mass-storage unit having a CD-ROM part. The CD-ROM part comprises a first software component. The USB device has a first configuration which comprises an interface of the mass-storage unit. The host machine has a second configuration. The CD-ROM part comprises a diagnostic agent and a configuration service. T h e diagnostic agent is capable of automatically starting for analyzing the second configuration and of generating a diagnostic status. The USB device comprises an installer means capable of selecting a set comprising the configuration service and the first software component according to said diagnostic status and of deploying the set into the host machine. The configuration service is capable of identifying a configuration data according to the second configuration. The USB device comprises a configuration means capable of adding a second interface into the first configuration according to the configuration data.

Advantageously, the installer means may be capable of installing the configuration service so as to have an automatically start-up of the configuration service after each logon on said host machine.

In a preferred embodiment, the first configuration may have a default value which comprises only one interface and the first configuration may be set to said default value when the device plugs into said host machine.

In a preferred embodiment, the first software component may be a driver corresponding to the second interface.

Advantageously, the CD-ROM part may be a hybrid CD-ROM part.

Advantageously, the CD-ROM part may comprise a second software component related to a driver, a service or an application and the set may comprise the second software component.

Advantageously, the USB device may be a USB flash drive, a Multimedia SIM card or a Multimedia Universal integrated Circuit Card.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a first embodiment of a portable USB device according to the invention;
- Figure 2 depicts schematically an example of the first part of a step sequence allowing the automatic update of the Host machine configuration according to the invention; and
- Figure 3 depicts schematically an example of the second part of a step sequence allowing the automatic update of the device configuration according to the invention.

### (Detailed description of the preferred embodiments)

The invention may apply to any types of USB devices which are able to provide the USB mass-storage class.

An advantage of the invention is to provide a USB device which is able to dynamically update its own configuration according to the type of the connected host machine in order to provide suited interfaces with the host machine.

According to the invention the USB device is able to automatically deploy on the host machine all drivers needed for accessing the possible interfaces of the USB device.

According to the invention the USB device is able to automatically deploy any applications and services on the host machine.

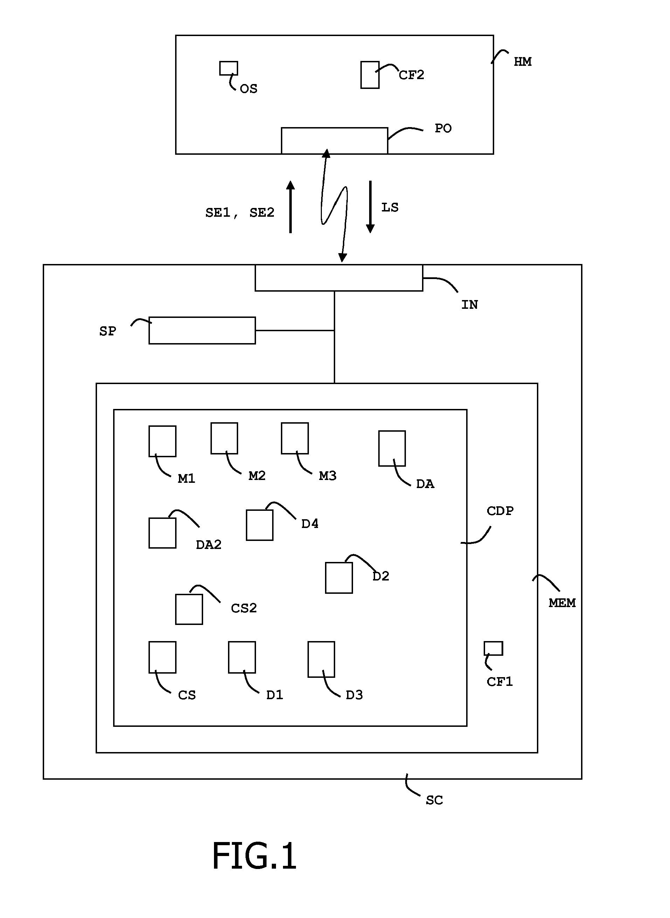

**Figure 1** shows the architecture of a portable USB device SC according to a first embodiment of the invention. In this example, the USB device SC comprises a large non-volatile flash memory MEM and a Universal Integrated Circuit card (UICC) which is noted SP. The USB device SC is connected to a personal computer HM via a USB port P0.

The USB device SC comprises a physical interface IN able to communicate through USB protocol. The portable electronic device SC is intended to exchange data according to USB standards through the communication interface IN. The UICC provides storage, security and computing features dedicated to the Telecom domain.

The flash memory MEM is managed as a mass-storage unit. The device SC is able to manage several logical interfaces. The first interface is associated to the mass-storage unit MEM. The other interfaces are associated to the UICC. In the example of Figure 1, an interface allows accessing the UICC part through the Ethernet Emulation Model (EEM) mode which relies on the Internet Protocol (IP) for exchanging data.

The flash memory MEM comprises the configuration CF1. The configuration CF1 defines the current logical interfaces which allow accessing the resources of the device SC.

The default value of the configuration CF1 defines only one logical interface: the mass-storage interface. When the device SC is attached to a host, the configuration CF1 is set to the default value. Consequently, the first enumeration step of the device SC exposes only the mass-storage interface.

The mass-storage unit comprises a CD-ROM part CDP. Data that is stored into the CD-ROM part may be accessed by the host machine HM as data stored in a physical CD-ROM unit. The host machine is assumed to have its own configuration CF2. The configuration CF2 contains data related to the operating system OS of the host machine HM and related to the installed software components able to access a mass-storage interface and to manage a CD-ROM part. In a preferred embodiment, the CD-ROM part is a hybrid CD-ROM compliant with MS-Windows ® and Linux ®. Thanks to the hybrid CD-ROM mechanism, the reachable content of the CD-ROM part may depend on the type of the operating system of the connected host machine. Thus only a subset of the CD-ROM part may be accessible to the host machine. The subset contains the software components which are compliant with the operating system of the host machine.

In the example of Figure 1, the host machine HM is a personal computer. The host machine may be any machine having a USB host port. In particular, the host machine HM may be a notebook, a Telecom handset, a multimedia player or any computer.

In the example of Figure 1, the whole flash memory MEM is managed as a mass-storage unit. Alternatively, only a part of the flash memory MEM may managed as a mass-storage unit.

The CD-ROM part CDP comprises two configuration services CS and CS2, four software components D1, D2, D3 and D4, two diagnostic agents DA and DA2, two installer means M1 and M2 and a configuration means M3.

The diagnostic agents DA and DA2 are able to analyze the configuration CF2 of the connected host machine HM and to generate a diagnostic status related to the configuration CF2. In the example of Figure 1, the diagnostic agent DA is compliant with MS-Windows ® operating systems and the diagnostic agent DA2 is compliant with Linux ®.

The installer means M1 is compliant with MS-Windows ® operating systems. The installer means M1 is able to select a set of elements according to the diagnostic status generated by the diagnostic agent DA. The installer means M2 is compliant with Linux ® operating system. The installer means M2 is able to select a set of elements according to the diagnostic status generated by the diagnostic agent DA2. The elements belonging to the selected set are stored in the CD-ROM part of the USB device SC. These elements may be a configuration service or some software components. The installer means M1 and M2 are able to deploy the selected set into the connected host machine. In other word the installer means M1 and M2 are able to load and install all elements of the selected set into the host machine connected to the USB device.

The configuration services CS and CS2 are able to check if the configuration CF2 of the host machine is correct in comparison with a preset configuration. The configuration services CS and CS2 are able to identify a configuration data LS according to the checking of the configuration CF2. This configuration data LS is intended to be provided to the configuration means M3. The configuration means M3 is able to update the USB device configuration. For example, the configuration means M3 is able to add a second interface into the configuration CF1 of the device SC according to the configuration data. In other words, the configuration means M3 is able to mount new USB interfaces into the device SC and to launch a USB enumeration sequence allowing the device SC to expose the new interfaces.

The configuration means M3 is independent of the operating system of the connected host machine.

In the example of Figure 1, the configuration service CS is compliant with MS-Windows ® operating systems and the configuration service CS2 is compliant with Linux ®.

The software components D1 and D2 are two drivers intended to be installed into a host machine. The drivers D1 and D2 allow accessing the UICC part through the Ethernet Emulation Model (EEM) mode. In the example of Figure 1, the software component D1 is a driver compliant with MS-Windows ® operating systems and the software component D2 is a driver compliant with Linux ®.

The software components D3 and D4 are two versions of a Loyalty application which is intended to be installed into the host machine HM. The Loyalty application D3 and the Loyalty application D4 are able to use the UICC part of the device SC. In the example of Figure 1, the software component D3 is an application compliant with MS-Windows ® operating systems and the software component D4 is an application compliant with Linux ®.

In the example of Figure 1, the CD-ROM part may be a hybrid CD-ROM compliant with MS-Windows ® and Linux ®. Thus the reachable content of the CD-ROM part may be CS, DA, D1, D3, M1 and M3 when the USB device is connected to a host machine managed by a MS-Windows ® operating system. The reachable content of the CD-ROM part may be CS2, DA2, D2, D4, M2 and M3 when the USB device is connected to a host machine managed by a Linux ® operating system.

In the example of Figure 1, the CD-ROM part comprises the same number of drivers and applications for Windows ® and Linux ®.

Alternatively, the number and the type of drivers may be different for each operating system. The number and the type of applications may be different for each operating system.

In a preferred embodiment, the CD-ROM part of the USB device is managed as a true CD-ROM unit. Thus a file cannot be overwritten into the CD-ROM part. The files and software components stored into the CD-ROM part of the device SC are protected against unintentional or malicious updating operations. An advantage of the invention is to guarantee that software components which are installed on the host machine are safe and secured since these components are retrieved from the CD-ROM part of the USB device.

Alternatively writing operations may be authorized under conditions into the CD-ROM part. For example, an update of a software component may be performed from the UICC SP which is a secure area. Anyway the CD-ROM part remains with access conditions set to Read Only for the connected host machine. This alternative embodiment is particularly interesting when the UICC SP is able to retrieve new data from a distant server in order to update the CD-ROM part content. Thus the current software components, files, agents and services may be upgraded and new software components, agents and services may be stored into the CD-ROM part. Such deployment may be carried out through the OTA mechanism for example. Thanks to the invention, new or updated features may be deployed into the CD-ROM part of a set of USB devices which are on the field.

In the above described example the diagnostic agent DA and the installer means M1 are shown as two distinct elements having each one a specific function. These two elements may be merged in one software element.

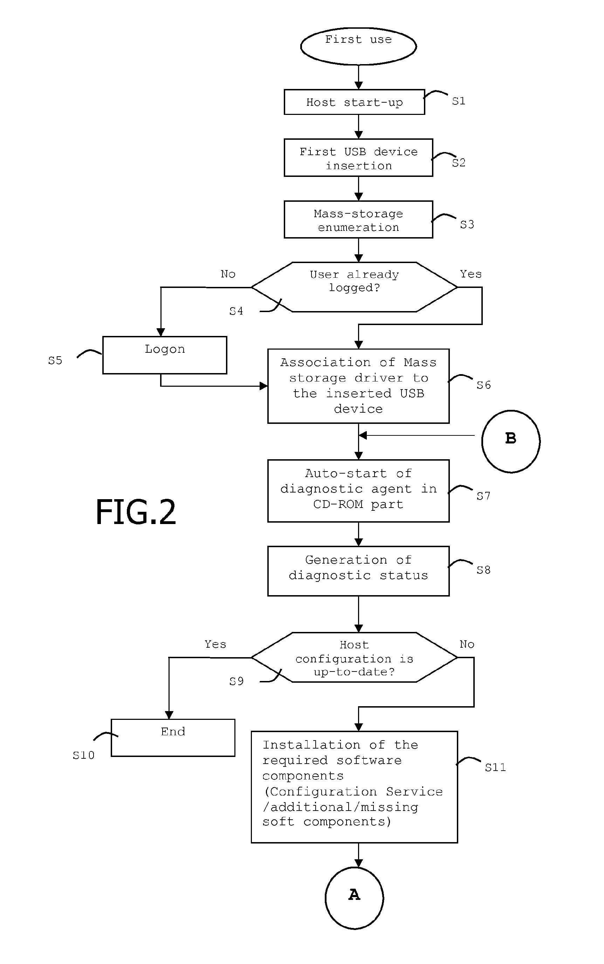

**Figure 2** is a flow chart showing a first part of a step sequence allowing the automatic update of the Host machine configuration according to the invention.

The USB device SC of Figure 1 is assumed to be used with a host machine HM of personal computer (PC) type.

The first step S1 starts only at the first use of the USB device. At this stage, the host machine and the USB device may have disparate configurations.

At a first step S1, the Host HM is started. In this example, the host machine is a personal computer having a MS-Windows operating system. Then at step S2, a USB device SC is plugged into the host HM for the first time. The USB device SC is assumed to be the device described at Figure 1. A USB enumeration is automatically started at step S3. The device SC will expose a unique interface which corresponds to its mass-storage part. Then at step S4 the current logon is checked. If no user is logged, a PC user is assumed to logon at step S5.

When a user is logged (either directly after S4 or after S5) the driver corresponding to the mass-storage is associated to the inserted USB device into the personal computer and the USB enumeration is completed. This association is assumed to be carried automatically by the operating system of the personal computer HM at step S6. Then the CD-ROM Auto-run launches the diagnostic agent DA at step S7. The launching of the diagnostic agent DA is automatically performed since the diagnostic agent DA is stored in the CD-ROM part of the USB device and is set in auto-start mode. This mode is also named Auto-run. Then the diagnostic agent DA checks if the expected configuration is installed in the personal computer HM. In this example, the personal computer HM is assumed not to have a driver corresponding to the expected interface (i.e. no driver for the EEM interface). At step S8, the diagnostic agent DA generates a diagnostic status containing the list of software components to be installed on the host machine. The diagnostic status contains data related to the type of the PC operating system (i.e. MS-Windows ®) and the lack of driver for EEM interface.

The diagnostic status is sent to the USB device and the installer means M1 checks if the configuration of the PC configuration is up-to-date at step S9. Since the diagnostic status shows that the configuration CF2 must be updated, the installer means M1 selects a set of elements to be deployed into the PC. This set comprises the configuration service CS and the driver D1 that corresponds to the EEM interface. The driver D1 is a software component stored into the CD-ROM part of the USB devices SC. The configuration service CS is in charge of detecting the USB devices insertion in the host. The configuration service CS is activated when the expected USB devices is plugged.

At step S11, both the configuration service CS and the driver D1 are loaded and installed into the host machine HM by the installer means M1. The configuration service CS is set in auto-start mode. Thus each time a user logon will occur on the PC, the configuration service CS will automatically start.

The auto-start mode of the configuration service allows managing an auto-run mechanism into the USB device even if the USB device is never unplugged/plugged.

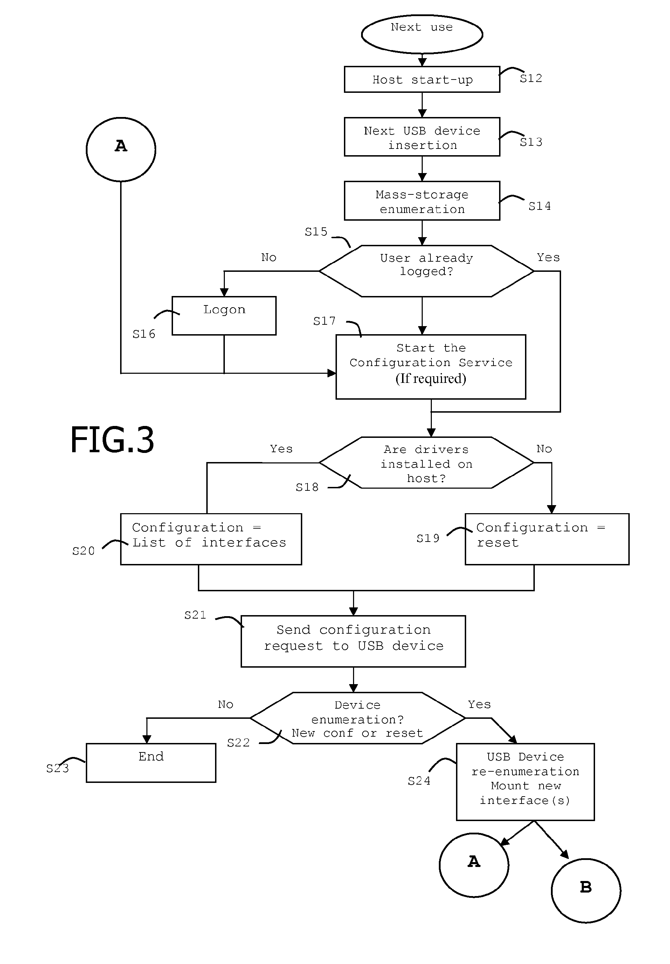

After the installation of step S11, the method goes on as shown at figure 3. A symbol "A" has been drawn for the connection between Figure 2 and Figure 3.

Alternatively, if the checking of the configuration CF2 shows that the PC configuration CF2 is up-to-date during step S9, then the sequence ends at step S10. The probability that the configuration CF2 is up-to-date at the first insertion of the USB device is very low.

**Figure 3** is a flow chart showing a second part of a step sequence allowing the automatic update of the host machine and device configurations according to the invention.

Coming from the step S11 of Figure 2 (via the connecting point "A"), the configuration service CS is started at step S17. The configuration service CS is launched by the installer means M1 if the configuration service CS was not already running.

At step S18, the configuration service CS checks the configuration CF2 of the connected host machine HM The configuration service CS check the presence of required drivers on the host machine. In particular, the configuration service CS may compare the configuration CF2 to a preset list of software driver components which are expected to be available on the host machine. The configuration service CS identifies all the missing drivers that should be installed on host machine side.

If at least one additional driver must be installed, then the configuration request is built with a query for a reset at step S19. Thus a reset will occur into the USB device and the missing driver(s) will be installed via the connecting point "B".

Otherwise the configuration request is built with a query for a list of interfaces to be mounted at step S20. The query may comprise a list LS of interfaces to enumerate. The list LS is also named configuration data.

Then at step S21, the configuration service CS notifies the USB device SC with configuration request. In a preferred embodiment, the list LS may be send through a "USB Get descriptor" command by adding new dedicated parameters which are retrieved by the configuration means M3. Alternatively, a "SCSI" command may be used to transport the list LS.

At step S22, the configuration means M3 analyzes the configuration request and checks if the device configuration CF1 must be updated.

If the requested interfaces are already present, the sequence ends to step S23. In other words, if the request contains a list of required interfaces which are already installed into the USB device, the sequence ends.

If a new configuration is needed or a USB device reset is needed, the sequence goes on to step S24 where a new USB enumeration operation is automatically launched and requested interface may be mounted on the device SC.

For example, the configuration means M3 may conclude that an additional interface must be mounted on the device SC and must be enumerated according to USB standard. Thus at step S24, a new enumeration operation is automatically launched by the device SC and the EEM interface is mounted on the device SC. At the step S24 two cases may occur:
1- A reset of the device SC is requested, so the auto-start will be launched (through the connecting Point "B") to reconfigure the host machine. In particular the required drivers and the possible missing software components are installed.
2- A new interface shall be mounted on the USB device, so the USB device will reboot and expose all the expected interfaces. In the described example, the new enumeration sequence exposes both the mass-storage interface and the EEM interface.

At the end of the step S24, two sub-sequences are started. The method goes on at both step S7 as shown at Figure 2 and step S17 as shown at Figure 3. A symbol "B" has been drawn for the connection between Figures 3 and 2. Thus from step S24, the step S7 is started via the connecting point "B" and the step S17 is started via the connecting point "A". Due to treatment time, the "A" way is executed before the "B" way. Through the connecting point "A", the configuration service is quickly activated before the auto-start of the diagnostic agent of the CD-ROM part which activated via the connecting point "B".

Via the connecting point "A", a loop is performed to the step S17 where the configuration service CS is started again. The host configuration CF2 is checked again at step S18 and since CF2 is up-to-date, the configuration service CS notifies the USB device SC with the list LS of expected interface to enumerate at step S21. Since the last configuration CF1 is up-to-date, there is no need for a new enumeration (all the interfaces are already mounted) and the method stops at step S23.

Coming from the step S24 of Figure 3 (via the connecting point "B"), the method comes to step S7 of Figure 2. The CD-ROM Auto-run launches the diagnostic agent DA at step S7. The diagnostic agent DA is automatically started thanks to the auto-start mechanism of the CD-ROM part. The diagnostic agent DA checks if the expected configuration is installed in the personal computer HM. In this example, the personal computer HM is assumed to have the EEM driver corresponding to the expected interface. At step S8, the diagnostic agent DA generates a diagnostic status containing the list of software components to be installed. In this example, there is no additional software component to be installed on the host machine. Since the PC configuration CF2 is up-to-date, the sequence ends at step S10.

If a reset occurs at step S24, a new interface will be requested at step S20, the USB device will be rebooted, the sequence will go on through the connecting points "A" and "B" again.

According to the Figure 3, the sequence may also start at step S12 where the PC is started. Then at step S13, the USB device SC is plugged again into the host HM. In other word it is not the first time the USB device SC plugs into the host machine HM. A USB enumeration is automatically launched at step S14. The device SC exposes a unique interface which corresponds to its mass-storage part. Whatever the previous use of the device SC is, the default value of the configuration CF1 is retrieved and used when the device is plugged to a host machine. This default value guarantees that the device SC has a predictable behavior whatever the connected host is. Thus even if the EEM interface has been mounted during a previous use, the device restarts with a configuration CF1 limited to the mass-storage interface.

At this stage, the driver corresponding to the mass-storage is assumed to have been installed into the personal computer during a previous step.

Then at step S15 the current logon is checked. If no user is logged, a PC user is assumed to logon at step S16.

When the user is logged (either directly after S15 or after step S16) the configuration service CS is automatically started on the host machine HM a step S17. This automatic starting of the configuration service CS is due to the fact that the configuration service CS has been set in auto-start mode when installed into the PC. If a user was already logged, the configuration service CS is assumed to be already started and the configuration service CS is activated by the device insertion.

In a preferred embodiment, the configuration service CS is registered on the USB device insertion events into the operating system of the host machine.

Then the configuration service CS checks the configuration CF2 of the host machine at step S18. The configuration service CS checks the presence of required driver into the host machine. The method goes on through the steps S20 and S21.

In particular, at step S20, a configuration request is built according to the required missing driver(s). Then at step S21 the configuration service CS notifies the USB device SC with the list LS of interfaces to enumerate. At step S22, the configuration means M3 concludes that an additional interface (i.e. EEM interface) must be mounted on the device SC and enumerated according to USB standard. Thus at step S24, the EEM interface is mounted on the device SC and a new enumeration operation is automatically launched by the device SC. This new enumeration sequence exposes both the mass-storage interface and the EEM interface. The re-enumeration will start the Configuration service through the connecting point "A" and the auto-start will be launched through the connecting point "B".

The step sequence is executed as described in the above-explained examples.

After the step S19, the configuration CF1 of the USB device is updated from the auto-start (through the connecting point "B") and the possible missing drivers are installed on the host machine accordingly. In this case, the method loops on the step S17 via the connecting point "A" and goes to the step S7 via the connecting point "B" until step S10 or step S23.

If the user logon occurred before the device insertion, then the diagnostic agent DA is automatically launched because the auto-start mechanism of the CD-ROM part is activated by the new enumeration sequence which exposed the mass-storage interface.

If the user logon occurred after the device insertion, then the configuration service CS is automatically launched.

The checking of the host configuration at step S18 is related to the presence of required drivers.

The checking of the host configuration at step S9 is related to the presence of a set of required software components which may be configuration service, drivers and applications.

The checking of step S9 allows detecting software components which have been modified or deleted on the host machine. The required software components (i.e. drivers, applications or services) are installed into the host machine HM. This checking of the configuration CF2 may be performed by verifying the integrity or the presence of a list of software components. Thus the configuration CF2 may be automatically updated. This automatic updating allows guaranteeing that the drivers, applications and services installed on the host machine (from the USB device) are safe and ready for use. In other words, an automatic integrity check of the software suite installed on the host may be carried out.

In the above-described examples, the host machine HM is a personal computer having an operating system OS of MS-Windows ® type. Alternatively, the host machine may be a computer having the Linux ® operating system or any other operating systems. Thanks to the hybrid CD-ROM, when the host machine is managed by Linux ®, the relevant elements may be automatically used in a similar way: installer means M2, diagnostic agent DA2, configuration service CS2, driver D2. The invention also applies to mass-storage having non hybrid CD-ROM or hybrid CD-ROM compliant with any number of operating systems.

When a user logon occurs, the configuration service is automatically started. Then if the USB device SC is inserted again then the configuration service is quickly activated before the auto-start of the diagnostic agent of the CD-ROM part. Thus the configuration of the USB device may be updated through a new USB enumeration without interference with the auto-start mechanism.

In usual Auto-start (i.e. Auto-run) mechanism of CD-ROM, the Auto-start is not activated when a USB device is inserted before the logon of a user. (Except the first time when the mass-storage driver has not been previously installed.)

Thanks to the invention, the host configuration CF2 and the USB device configuration CF1 are updated whatever the time where the device SC plugs into the host machine HM. In particular, the updating of the two configurations is automatically performed even if the USB device has been inserted before the start-up of the host or before the logon of a user in the host machine.

Thanks to the invention, the state of the host configuration may be guaranteed and controlled. The USB device may automatically update the host configuration by updating missing or corrupted software components on the host machine.

The invention allows deploying a large number of applications from the USB device to the connected host machine. For example, the deployed application may be related to banking, payment, health, commerce or gaming domains.

Alternatively, the USB device SC may be able to emulate a USB hub. In this case, the enumeration operation of step S24 may expose the new EEM interface only. The mass-storage interface is not re-enumerated and remains exposed to the host machine thanks to the previous enumeration operation. In this case the auto-start of the diagnostic agent DA is not activated. According to an embodiment of the invention, the diagnostic agent DA is automatically launched by the configuration service CS when the configuration CF1 is up-to-date at step S22.

In an embodiment of the invention, the configuration service CS is able to manage a preset list of USB devices. For example, the configuration service CS may use the Product identifier (PID) and the Vendor identifier (VID) for identifying a connected USB device. The configuration service CS may manage a set of parameters associated to each type of USB devices. The parameters may describes the subset of required interfaces associated to one a several operating systems. Advantageously, the step of building the configuration request may be carried out through a selection of one request among a set of predefined configuration requests.

According to the invention, the USB device is capable of automatically adapting its own configuration to capability of the connected host. Thus a set of USB devices which share the same content may be deployed on the field and able to work with different kinds of operating systems, and thus with different kinds of host machines. In particular, a USB device may be equally used with both a personal computer and a mobile phone. For example a USB device intended to connect a mobile phone may embed the drivers associated to Integrated Circuit Card Devices (ICCD), Ethernet Control Model (ECM), Integrated Circuit Card (CCID), or Media Transfer protocol (MTP) interface.

All these drivers correspond to interfaces allowing to access the UICC part of a device SC.

The Integrated Circuit Card Devices (ICCD) mode relies on Application Protocol Data Unit (APDU) for exchanging data. APDU is defined by the IS07816 standard.

## Claims

1. A method of managing a USB device (SC) comprising a mass-storage unit (MEM) having a CD-ROM part (CDP), said CD-ROM part (CDP) comprising a first software component (D1), said device (SC) having a first configuration (CF1) which comprises an interface of the mass-storage unit (MEM), said device (SC) being able to plug into a host machine (HM) having a second configuration (CF2),
**characterized in that** said CD-ROM part (CDP) comprises a diagnostic agent (DA) and a configuration service (CS) and **in that** said method comprises the following steps:
a) analyzing said second configuration (CF2) with said diagnostic agent (DA) and generating a diagnostic status,
b) selecting a first set comprising the configuration service (CS) and the first component (D1) according to the diagnostic status and deploying the first set into the host machine (HM),
c) identifying a configuration data (LS) according to the second configuration (CF2),
d) updating said first configuration (CF1) according to the configuration data (LS).

2. A method according to claim 1, wherein said method comprises the further step:
e) automatically starting the configuration service (CS) after each logon on said host machine (HM).

3. A method according to one of claims 1 to 2, wherein the first configuration (CF1) has a default value which comprises only one interface and wherein the first configuration (CF1) is set to said default value each time the device plugs into said host machine (HM).

4. A method according to one of claims 1 to 3, wherein said updating step of the first configuration (CF1) corresponds to the addition of a second interface into the first configuration (CF1) and wherein the first software component (D1) is a driver corresponding to the second interface.

5. A method according to one of claims 1 to 4, wherein said CD-ROM part (CDP) is a hybrid CD-ROM part.

6. A method according to one of claims 1 to 5, wherein said CD-ROM part (CDP) comprises a second software component (D2), wherein the first set comprises the second software component (D2) and wherein said second component (D2) is related to a driver, a service or an application intended to be deployed into the host machine (HM).

7. A method according to one of claims 1 to 6, wherein said method comprises two additional steps which are executed after the updating step of the first configuration (CF1):
f) analyzing the second configuration (CF2) with said diagnostic agent (DA) and generating a second diagnostic status,
g) selecting a second set comprising the first software component (D1) according to the second diagnostic status and deploying the second set into the host machine (HM).

8. A method according to claim 7, wherein the second diagnostic status is generated by checking the presence or the integrity of software components which are deployed into the host machine (HM).

9. A USB device (SC) intended to be connected to a host machine (HM), said device (SC) comprising a mass-storage unit having a CD-ROM part (CDP), said CD-ROM part (CDP) comprising a first software component (D1), said device (SC) having a first configuration (CF1) which comprises an interface of the mass-storage unit (MEM), said host machine (HM) having a second configuration (CF2),
**characterized in that** said CD-ROM part (CDP) comprises a diagnostic agent (DA) and a configuration service (CS), **in that** said diagnostic agent (DA) is able to automatically start for analyzing the second configuration (CF2) and to generate a diagnostic status, **in that** said device (SC) comprises an installer means (M1) able to select a set comprising the configuration service (CS) and the first software component (D1) according to said diagnostic status and to deploy the set into the host machine (HM), **in that** said configuration service (CS) is able to identify a configuration data (LS) according to the second configuration (CF2) and **in that** said device (SC) comprises a configuration means (M3) able to add a second interface into the first configuration (CF1) according to the configuration data (LS).

10. A USB device (SC) according to claim 9, wherein said installer means (M1) is able to install the configuration service (CS) so as to have an automatically start-up of the configuration service (CS) after each logon on said host machine (HM).

11. A USB device (SC) according to one of claims 9 to 10, wherein the first configuration (CF1) has a default value which comprises only one interface and wherein the first configuration (CF1) is set to said default value when the device plugs into said host machine (HM).

12. A USB device (SC) according to one of claims 9 to 11, wherein the first software component (D1) is a driver corresponding to the second interface.

13. A USB device (SC) according to one of claims 9 to 12, wherein said CD-ROM part (CDP) is a hybrid CD-ROM part.

14. A USB device (SC) according to one of claims 9 to 13, wherein said CD-ROM part (CDP) comprises a second software component (D2) related to a driver, a service or an application and wherein the set comprises the second software component (D2).

15. A USB device (SC) according to one of claims 9 to 14, wherein said device (SC) is a USB flash drive, a Multimedia SIM card or a Multimedia Universal integrated Circuit Card.
